# EUROPEAN PATENT SPECIFICATION

(11) **EP 0 722 668 B1**
(45) Date of publication and mention of the grant of the patent: **16.10.2002**
(21) Application number: 96300431.2
(22) Date of filing: 23.01.1996
(51) Int. Cl.: A23K 1/16

(54) **Improving the bulk density and drying economics of amino acids**
Verbesserung des Schüttgewichts und der Energieeinsparung beim Trocknungsverfahren von Aminosäuren
Procédé pour améliorer la densité apparente et pour économiser pendant le séchage des acides aminés

(30) Priority: 24.01.1995 US 377760
(43) Date of publication of application: 24.07.1996
(73) Proprietor: ARCHER DANIELS MIDLAND COMPANY, Decatur, Illinois 62526 (US)
(72) Inventor: Dueppen, Daniel, Decatur, Illinois 62526 (US); Matlock, Mark, Decatur, Illinois 62526 (US); Binder, Thomas, Decatur, Illinois 62526 (US)
(74) Representative: Bond, Bentley George

(56) References cited:
- US-A- 4 734 401
- DATABASE WPI Week 8708 Derwent Publications Ltd., London, GB; AN 87-054254 XP002001895 & JP-A-62 011 098 (AJINOMOTO KK) , 20 January 1987

## Description

This invention relates to a process for formulating a food supplement powder, which involves incorporating a relatively insoluble amino acid at a lower cost than previously possible.

Various patents provide background information in the field of processing and drying amino acids. For example, U.S. Patent 4,837,371 (Ogawa et al.) describes a process which uses an aliphatic alcohol and a reverse osmosis membrane for concentrating an aqueous solution containing an amino acid having a low solubility in water.

U.S. Patent 4,734,401 (Blouin) is for a process which spray dries a solution containing one or more amino acids and optionally other components such as salts, buffers, lipids, vitamins, trace elements, and electrolytes.

U.S. Patent 4,886,659 (Baines et al.) relates to drying an aqueous mixture of Maillard reactants, as by spray drying; however, the process is primarily one of producing a distinctive colour. The Maillard reactants may include various amino acids, among other things.

U.s. Patent 5,057,615 (Kano et al.) describes a process for purifying tryptophan by use of water containing acetic acid and a process of heating and cooling to obtain a crystallized tryptophan.

Various grains and oil seed means are used to feed livestock throughout the world. The proteins in these grains and seed means include various amino acids in a polymeric form. The amino acid distribution of various feeds may be deficient in certain amino acids. This deficiency has led to the blending of certain meals with less expensive grains in order to provide a balanced amino acid profile for the feeding of livestock. When the livestock receive a balanced amino acid profile in the diet they consume less feed to market size.

As many of the commonly available animal feed blends tend to be somewhat deficient in certain key amino acids, the production of amino acids for animal feed use has become a worldwide business. The amino acid supplements can be produced either by fermentation or by chemical means. These pure amino acids are then added at the required levels to provide a balanced protein diet for livestock feeding. Some amino acids are still too expensive or difficult to handle to be widely used at this time.

According to the present invention, there is provided a process for formulation of a food supplement powder by improving the solubility, mixability, and drying of amino acids in water, the process comprising:
preparing hot saturated aqueous solutions comprising at least two different amino acids, one of the amino acids being hydrophobic and having low solubility in water and the other of the amino acids having a high solubility in water;
mixing the hot saturated aqueous solutions to prepare a hot solution mixture;
cooling the hot solution mixture; and
drying the cooled solution to form an animal food supplement in a dry powdered form.

In one embodiment, two amino acids are used, the amino acids being lysine and tryptophan.

In another embodiment, two amino acids are used, the amino acids being methionine and lysine.

In yet another embodiment, two amino acids are used, the amino acids being methionine and threonine.

In yet another embodiment, two amino acids are used, the amino acids being tryptophan and threonine.

The present invention makes it possible to provide a manufacturing process which reduces the cost of manufacturing powders incorporating hydrophobic amino acids having a low solubility in water. The present invention achieves this by the use of a blend of several amino acids, where the high solubility of one amino acid tends to overcome the low solubility of another amino acid. In this connection, an object is to reduce manufacturing costs of such a blend by reducing the amount of water which must be extracted from the mixture during the drying process.

The present invention makes it possible to prepare amino acids in a dense dry powder form which reduces the volume (and therefore shipping cost) and which aids the animal husbandry by making a cleaner and more healthy environment by eliminating a light dry flake which might otherwise blow around and be suspended in the air.

In keeping with the present invention, these benefits are accomplished by mixing a low soluble hydrophobic amino acid, such as tryptophan, with a high soluble amino acid, such as lysine. The hydrophobic amino acid part of the resulting mixture has about one-half of the amount of water that approximately the same amount of the low soluble amino acid would contain if treated alone. The resulting cost for drying the mixture is a fraction of the corresponding cost of drying the insoluble amino acid, per se. Also, the bulk of the dry mixture is a small fraction of the bulk of conventional dry low-soluble amino acid particles, thereby greatly reducing shipping costs.

The single attached Figure is a graph which shows how the solubility of tryptophan, per se, varies with temperature.

### Detailed Description of the Invention:

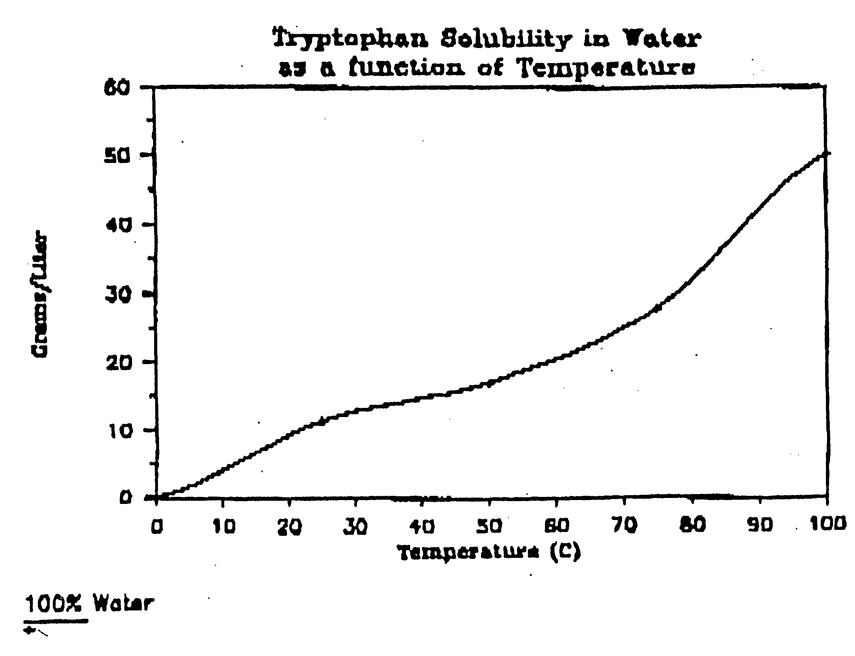

In the commercial preparation of pure amino acids, some amino acids are particularly difficult to dry due to their low solubility in water. L-Tryptophan is an example of such an amino acid. The solubility curve of tryptophan with respect to temperature is shown in the attached Figure. This low solubility requires drying a large amount of water if the product is not to precipitate from solution and clog drier spray nozzles. For this reason the economics of drying pure tryptophan are very poor. This low solubility also produces a product with a very fine particle size.

Spray drying such dilute solutions of tryptophan is undesirable for a number of reasons. First, the fine particle size results in a very low bulk density which increases packaging and transportation costs. It also contributes to dusting and handling problems for the end user of the product.

If it is possible to increase the solubility of a relatively insoluble amino acid, such as tryptophan, then the cost of drying, packaging and handling would all be reduced.

The inventive process in this application involves mixing two hot, saturated amino acid solutions so that the resulting solution mixture stays in solution. Surprisingly, these mixtures of amino acids are then still soluble above their individual solubility limits when the mixed solutions are cooled.

These mixed solutions allow a greatly improved economy over drying each amino acid separately and dry blending the resultant powdered products because of the reduction in water which must be evaporated. Drying this mixed amino acid solution also produces a dry product with higher bulk density than the low-soluble hydrophobic amino acids would have when dried alone. If these blends are produced in the right ratios, they can be used to formulate animal feeds with the correct amino acid balance to be useful to livestock feeders.

For spray-drying, tryptophan drier feed solutions usually range from 30 grams per litre to 60 grams per litre of L-Tryptophan depending on the temperature of the drier feed tank. In the case of L-Lysine hydrochloride, the drier feed can be 400 to 500 grams per litre if the feed tank can be held at high temperature. Blends of these two amino acids can be kept in solution at higher dry solids levels than the hydrophobic amino acid's solubility in water alone. This allows an improved economy in the drying operation and produces a higher bulk density product.

### Example 1:

A series of solutions were made by dissolving pure lysine and pure tryptophan both manufactured by the Archer Daniels Midland Company of Decatur, Illinois. Each solution was prepared by adding the given weight of amino acids to 50 millilitres of water in a 250 millilitre Erlenmeyer flask. The solutions were stirred with a magnetic stir bar while being heated on a hot plate. The temperature was recorded with a digital pyrometer using a 1/16 inch (1.6 mm) diameter probe.

As the solutions were heated, they were visually monitored to determine the temperature where the solutions became non-turbid. Table 1 summarizes the solubility information. From the table it can be seen that the mixtures of tryptophan and lysine are still soluble as dry solids considerably above the solubility of tryptophan. These amino acid solutions can then be dried by spray granulation or by spray drying, as shown in Example 2.

### Example 2:

Solutions containing tryptophan and lysine in the proportions given in table 2 were spray dried on a Niro laboratory spray drier with an air driven rotary atomizer. For all samples an inlet temperature of 275°C was used with an outlet temperature ranging from 110°C to 120°C. The bulk density of the dry powder samples were measured by putting a quantity of the powder in a tared 100 ml graduated cylinder. The cylinder was tapped seven times, the level of the powder was read and the gross weight of the cylinder was measured. The weight of the powder was divided by the volume to calculate the bulk density.

Table 2 shows the bulk density for several ratios of lysine to tryptophan. It can be seen that for two of the three ratios the bulk density of the spray dried mixture was higher than either the lysine or tryptophan alone. In particular, the bulk density of all the mixtures was nearly twice that of the tryptophan.

**Table 1**

| Flask | Lysine (grams) | Tryptophan (grams) | Temp. (°F) | Comments (all samples in 50 ml water) | Lys/Tryp Ratio | Dry Solids (g/kg) | Temp (°C) |
|---|---|---|---|---|---|---|---|
| A | 70 | 5 | 230 | in solution | 14 | 600 | 110 |
| B | 60 | 5 | 226 | in solution | 12 | 565 | 108 |
| C | 50 | 5 | 233 | in solution | 10 | 524 | 111.7 |
| D | 40 | 5 | 223 | in solution | 8 | 474 | 106 |
| A | 70 | 6 | 238 | in solution | 11.7 | 603 | 114.5 |
| B | 60 | 6 | 236 | in solution | 10 | 569 | 113 |
| C | 50 | 6 | 242 | almost in solution | 8.3 | 528 | 116.3 |
| D | 40 | 6 | 240 | not in solution | 6.7 | 479 | 115.5 |
| A | 70 | 6.5 | 245 | in solution | 10.8 | | 118 |
| B | 60 | 6.5 | 242 | almost in solution | 9.2 | | 116.7 |
| C | 50 | 6.5 | 243 | not in solution | 7.7 | | 117 |
| A | 70 | 7 | 243 | almost in solution | 10 | | 117 |
| B | 60 | 7 | 242 | not in solution | 8.6 | | 116.1 |

**Table 2**

| Sample | Mixture Dried | Bulk Density g./ml. | Bulk Density lbs./cu. ft. |
|---|---|---|---|
| Pure Tryptophan | | 0.145 | 9.06 |
| Pure Lysine | | 0.350 | 21.9 |
| 10:1 Lysine:Tryptophan | 700g Lysine + 70g Tryptophan | 0.295 | 18.4 |
| 12:1 Lysine:Tryptophan | 840g Lysine + 70g Tryptophan | 0.370 | 23.1 |
| 14:1 Lysine:Tryptophan | 980g Lysine + 70g Tryptophan | 0.418 | 26.1 |

## Claims

1. A process for formulation of a food supplement powder by improving the solubility, mixability, and drying of amino acids in water, the process comprising:
preparing hot saturated aqueous solutions comprising at least two different amino acids, one of the amino acids being hydrophobic and having low solubility in water and the other of the amino acids having a high solubility in water;
mixing the hot saturated aqueous solutions to prepare a hot solution mixture;
cooling the hot solution mixture; and
drying the cooled solution to form an animal food supplement in a dry powdered form.

2. A process according to claim 1, in which the hot saturated aqueous solutions are each at a temperature of at least about 220°F (104°C), and the hot solution mixture is cooled to room temperature.

3. A process according to claim 1 or 2, in which two amino acids are used, the amino acids being lysine and tryptophan.

4. A process according to claim 3, in which the hot saturated aqueous solution of lysine contains at least 200 grams of lysine per litre of water and the hot saturated aqueous solution of tryptophan contains at least 50 grams of tryptophan per litre of water.

5. A process according to claim 1 or 2, in which two amino acids are used, the amino acids being methionine and lysine.

6. A process according to claim 1 or 2, in which two amino acids are used, the amino acids being methionine and threonine.

7. A process according to claim 1 or 2, in which two amino acids are used, the amino acids being tryptophan and threonine.

## Patentansprüche

1. Verfahren zur Formulierung eines Nahrungsmittel-Ergänzungspulvers durch Verbesserung der Löslichkeit, der Mischbarkeit und der Trocknung von Aminosäuren in Wasser, umfassend
das Zubereiten von heißgesättigten wässrigen Lösungen, die mindestens zwei verschiedene Aminosäuren enthalten, wovon eine hydrophob ist und eine geringe Löslichkeit in Wasser und die andere eine hohe Löslichkeit in Wasser besitzt,
das Mischen der heißgesättigten wässrigen Lösungen zum Erhalt einer heißen Lösungsmischung;
das Kühlen der heißen Lösungsmischung und
das Trocknen der gekühlten Lösung zum Erhalt einer Tiernahrungsergänzung in trockener Pulverform.

2. Verfahren nach Anspruch 1, wobei die heißgesättigten wässrigen Lösungen jeweils eine Temperatur von mindestens etwa 220°F (104°C) besitzen und die heiße Lösungsmischung auf Raumtemperatur gekühlt wird.

3. Verfahren nach Anspruch 1 oder 2, wobei die beiden verwendeten Aminosäuren Lysin und Tryptophan sind.

4. Verfahren nach Anspruch 3, wobei die heißgesättigte wässrige Lysin-Lösung mindestens 200 g Lysin pro Liter Wasser enthält und die heißgesättigte wässrige Typtophan-Lösung mindestens 50 g Typtophan pro Liter Wasser enthält.

5. Verfahren nach Anspruch 1 oder 2, wobei die zwei verwendeten Aminosäuren Methionin und Lysin sind.

6. Verfahren nach Anspruch 1 oder 2, wobei die zwei verwendeten Aminosäuren Methionin und Threonin sind.

7. Verfahren nach Anspruch 1 oder 2, wobei die zwei verwendeten Aminosäuren Tryptophan und Threonin sind.

## Revendications

1. Procédé pour formuler une poudre de complément alimentaire par amélioration de la solubilité, de l'aptitude au mélange et du séchage d'acides aminés dans l'eau, le procédé comprenant :
la préparation de solutions aqueuses saturées chaudes comprenant au moins deux acides aminés différents, l'un des acides aminés étant hydrophobe et ayant une faible solubilité dans l'eau et l'autre des acides aminés ayant une grande solubilité dans l'eau,
le mélange des solutions aqueuses saturées chaudes pour préparer un mélange de solutions chaudes ;
le refroidissement du mélange de solutions chaudes ; et
le séchage de la solution refroidie pour former un complément alimentaire pour animaux sous une forme pulvérulente sèche.

2. Procédé selon la revendication 1, où les solutions aqueuses saturées chaudes sont chacune à une température d'au moins environ 220°F (104°C), et le mélange de solutions chaudes est refroidi à la température ambiante.

3. Procédé selon la revendication 1 ou 2, où deux acides aminés sont utilisés, les acides aminés étant la lysine et le tryptophane.

4. Procédé selon la revendication 3, où la solution aqueuse saturée chaude de lysine contient au moins 200 g de lysine par litre d'eau et la solution aqueuse saturée chaude de tryptophane contient au moins 50 g de tryptophane par litre d'eau.

5. Procédé selon la revendication 1 ou 2, où deux acides aminés sont utilisés, les acides aminés étant la méthionine et la lysine.

6. Procédé selon la revendication 1 ou 2, où deux acides aminés sont utilisés, les acides aminés étant la méthionine et la thréonine.

7. Procédé selon la revendication 1 ou 2, où deux acides aminés sont utilisés, les acides aminés étant le tryptophane et la thréonine.
